# EUROPEAN PATENT APPLICATION

(11) **EP 1 292 009 A2**
(43) Date of publication of application: **12.03.2003**
(21) Application number: 02019860.2
(22) Date of filing: 09.09.2002
(51) Int. Cl.: H02P 7/00

(54) **Vibration-generating device which causes variations in vibration and electronic apparatus including the same**

(30) Priority: 10.09.2001 JP 2738000001; 27.09.2001 JP 2001295735
(71) Applicant: ALPS ELECTRIC CO., LTD., Tokyo 145-8501 (JP)
(72) Inventor: Masuda, Atsushi, Alps Electric Co., Ltd., Ota-ku, Tokyo 145-8501 (JP)
(74) Representative: Klunker . Schmitt-Nilson . Hirsch

(57) **Abstract**

A vibration-generating device includes a motor stored in a housing such that a rotating shaft projects from the housing. A weight is attached to the rotating shaft and a coil spring which serves as an elastic member is wound around the rotating shaft. One end of the coil spring is attached to a shaft and the other end to a restraining projection. When the rotating shaft and the weight reciprocate, the housing vibrates due to an impact which occurs every time the moving direction of the weight is reversed. When a stepping motor is used, an impact occurs and damping vibration is generated due to the impact when a driving pulse is applied to control the motor. Accordingly, the housing vibrates due to this impact or the damping vibration. In addition, rotation control is easily performed and various vibrations are obtained by changing the vibration frequency and amplitude.

## Description

### BACKGROUND OF THE INVENTION

### 1. Field of the Invention

The present invention relates to vibration-generating devices used in, for example, portable equipment, for vibrating the housings thereof. More specifically, the present invention relates to a vibration-generating device which causes variations in vibration and also relates to an electronic apparatus including the vibration-generating device.

### 2. Description of the Related Art

Controllers for video games or the like often include vibration-generating devices for causing the housings of the controllers to vibrate. When the housing of a game controller is vibrated by a vibration-generating device in accordance with the game status, the user playing the game experiences a greater sense of realism by feeling the vibration.

In such vibration-generating devices, a weight is attached to a rotating shaft of a brush DC motor or a coreless motor so that the rotating shaft rotates eccentrically. The motor vibrates due to a centrifugal force generated by rotating the weight, and the housing thereof vibrates accordingly. Controllers for video games, for example, contain two kinds of vibration-generating devices: a large one and a small one, so that vibrations having different amplitudes can be generated.

In addition, vibration-generating devices of the solenoid type are also known in the art, in which vibrations are generated by reciprocating an iron rod along its axis by using a magnetic field generated by applying a current to a coil.

However, in the above-described known vibration-generating device using the weight, although different kinds of vibrations can be generated by using a large device and a small device, the vibrations generated are flat and unmodulated. Therefore, when it is used in a game apparatus, there is a limit to the kinds of games in which the generated vibrations can be used. In addition, in the vibration-generating device of the solenoid type, there is a problem in that a large current is required and it is difficult to reduce the size of the device.

On the other hand, mobile phones having color displays have become popular, and some in which games are installed are also on the market. However, since mobile phones are small and the packaging density is high, it is difficult to install a plurality of vibration-generating devices for games.

### SUMMARY OF THE INVENTION

In order to solve the above-described problems, an object of the present invention is to provide a vibration-generating device which requires small electric power, which can be installed in a small housing, and which generates various vibrations, and to provide an electronic apparatus including the vibration-generating device.

According to one aspect of the present invention, a vibration-generating device includes a rotary motor retained inside a housing and a control unit which drives the motor, and the control unit reciprocally rotates a rotating shaft of the motor, thereby causing the housing to vibrate.

The vibration-generating device may be constructed such that an elastic member which connects the rotating shaft and the housing is provided, and when the rotational direction of the rotating shaft is reversed after the rotating shaft is rotated in one direction, a restoring force of the elastic member is applied to the rotating shaft. In addition, the vibration-generating device may also be constructed such that an elastic member which connects the rotating shaft and the housing is provided, and power of the rotating shaft is transmitted to the housing via the elastic member, thereby causing the housing to vibrate.

Preferably, a weight whose weight distribution is uneven around the rotational center of the rotating shaft is attached to the rotating shaft. Alternatively, a part of the rotating shaft may have a shape such that the weight distribution thereof is uneven around the rotational center.

Preferably, the motor is a stepping motor. In such a case, the frequency of the vibration of the housing may be varied by controlling driving pulses applied to the stepping motor by the control unit. In addition, the amplitude of the vibration of the housing may also be varied by controlling driving pulses applied to the stepping motor by the control unit.

According to the present invention, when the motor reciprocates, vibration or damping vibration is generated by an impact which occurs every time the moving direction of the motor is reversed. In addition, in the case in which a stepping motor is used, the rotational speed can be easily varied merely by varying a driving frequency, so that various vibrations can be generated. In addition, since the stepping motor starts/stops with a quick response time, sharply modulated vibration can be obtained.. Furthermore, since it is not necessary to provide a plurality of vibration-generating devices for obtaining various vibration modes, the vibration-generating device of the present invention may be installed in a housing of a small portable terminal such as a mobile phone.

According to another aspect of the present invention, a vibration-generating device includes a rotary stepping motor retained inside a housing and a control unit which drives the stepping motor, and the control unit rotates a rotating shaft of the stepping motor by driving the stepping motor, thereby causing the housing to vibrate.

In this case, the vibration-generating device may be constructed such that an elastic member which connects the rotating shaft and the housing is provided and vibration of the rotating shaft is transmitted to the housing via the elastic member.

When the rotating shaft is rotated by the stepping motor, an impact which occurs when the stepping motor is driven and damping vibration generated due to the impact are used for vibrating the housing. In addition, when the stepping motor is used, the rotating motion of the rotating shaft can be easily varied by merely controlling driving pulses (frequency), so that various vibrations can be generated. Furthermore, when the weight is provided or when the shape of a rotor is changed, the amplitude of the eccentric rotation of the rotating shaft increases. As a result, the vibration amplitude also increases.

In addition, an electronic apparatus according to the present invention includes the above-described vibration-generating device. The electronic apparatus may be, for example, a mobile phone, a personal handyphone system (PHS), a pager, a personal digital assistant (PDA), a notebook personal computer, a pointing device such as a mouse, a keyboard, play equipment, etc.

As described above, according to the present invention, a vibration-generating device which generates various vibrations even when it is installed in a small housing is provided. In addition, since the generated vibration can be sharply modulated, a user reliably feels a change in vibration. Especially when a stepping motor is used, a rotating motion can be easily controlled, and various vibrations can be generated.

### BRIEF DESCRIPTION OF THE DRAWINGS

Fig. 1 is a perspective view showing a vibration-generating device according to a first embodiment of the present invention;
Fig. 2 is a side view of the vibration-generating device according to the first embodiment;
Fig. 3 is a sectional view of Fig. 2 cut along line III-III;
Fig. 4 is a side view showing a vibration-generating device according to a second embodiment of the present invention;
Fig. 5 is a sectional view of Fig. 4 cut along line V-V;
Fig. 6 is a perspective view showing a vibration-generating device according to a third embodiment of the present invention;
Fig. 7 is a perspective view showing a modification of a motor contained in the vibration-generating device;
Fig. 8 is a perspective view showing a modification of the vibration-generating device show in Fig. 6;.
Fig. 9 is a graph of a waveform obtained when the motor vibrates;
Fig. 10 is a graph of a reference waveform showing the relationship between a time and a displacement;
Fig. 11 is a graph of a waveform obtained when the rotational direction is changed every two steps;
Fig. 12 is a graph of a waveform obtained when a rotating shaft is rotated by an amount corresponding to two steps by a single pulse;
Fig. 13 is a graph for explaining a method for obtaining sharply modified vibration;
Fig. 14 is a graph for explaining another method for obtaining sharply modified vibration;
Fig. 15 is a graph of a waveform obtained when the frequency is varied; and
Fig. 16 is a block diagram of an electronic apparatus including the vibration-generating device.

### DESCRIPTION OF THE PREFERRED EMBODIMENTS

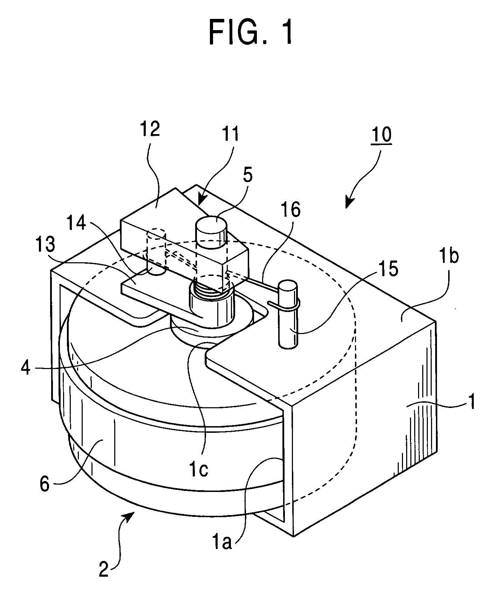

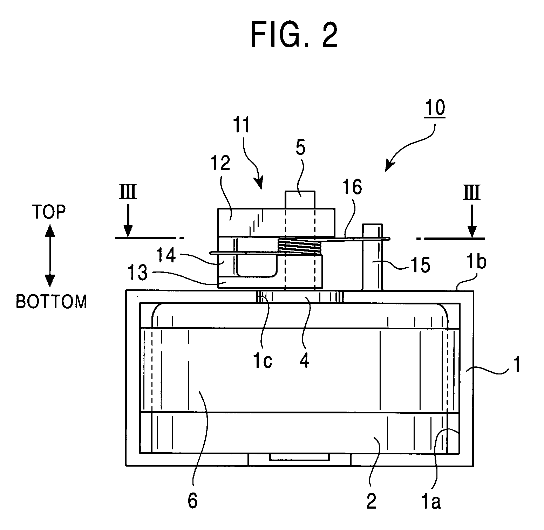

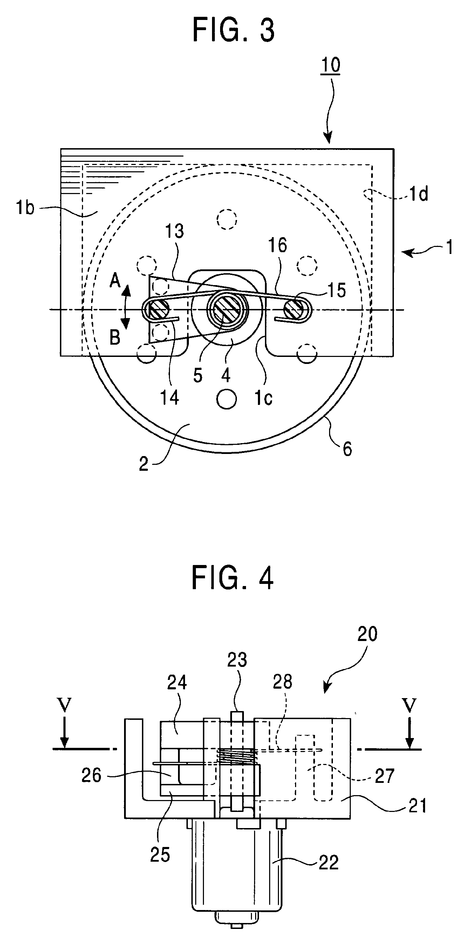

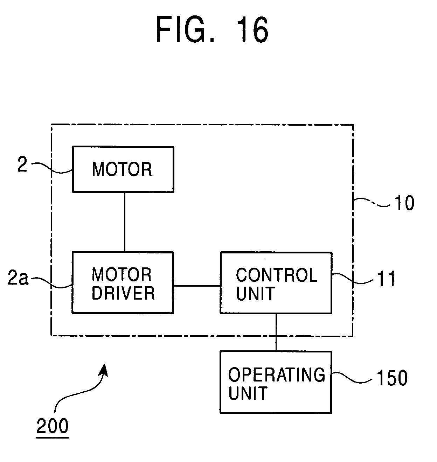

Fig. 1 is a perspective view of a vibration-generating device according to a first embodiment of the present invention, and Fig. 2 is a side view thereof. Fig. 3 is a sectional view of Fig. 2 cut along line III-III, and Fig. 16 is a block diagram showing an electronic apparatus including a vibration-generating device according to the present invention.

A vibration-generating device 10 includes a housing 1 and a motor 2 installed in the housing 1. The housing 1 is formed of a synthetic resin in a rectangular-box shape, and an opening 1a is formed at one side of the housing 1. In addition, a rectangular opening 1c is formed in the top surface 1b of the housing 1 such that the opening 1c extends from the central area of the top edge of the opening 1a. Although the housing 1 shown in the figures has a small, simple shape, it may also be formed such that it covers the entire body of a game controller, a mobile phone, etc.

The motor 2 is a pulse-driven stepping motor which rotates by a predetermined angle when a single driving pulse is applied. A bearing 4 is disposed on the top surface of the motor 2 at the central position thereof, and a rotating shaft 5 is rotatably retained by the bearing 4 such that the rotating shaft 5 projects upward. In addition, a buffer 6 formed of rubber in a band-like shape is disposed around the periphery of the motor 2. When the motor 2 is inserted into the housing 1 through the opening 1a, the buffer 6 is disposed between the motor 2 and the inner walls 1d of the housing 1, so that the motor 2 is surely retained inside the housing 1. An adhesive, screws, etc., may also be used for fixing the motor 2 to the housing 1. Since the buffer 6 is disposed between the motor 2 and the housing 1, high-frequency noise which is generated when the motor 2 is driven can be removed.

A weight 12 is attached to the rotating shaft 5 of the motor 2 in an eccentric manner. In addition, an arm 13 which extends in the same direction as the weight 12 is fixed to the rotating shaft 5 at a position between the weight 12 and the top surface 1b of the housing 1. A shaft 14 which connects the arm 13 and the weight 12 is integrally formed with the arm 13 and the weight 12 at the outer ends thereof. In addition, a restraining projection 15 is formed on the top surface 1b of the housing 1 at a position such that the restraining projection 15 and the shaft 14 oppose each other across the rotating shaft 5.

A coil spring 16, which serves as an elastic member, is wound around the rotating shaft 5. One end of the coil spring 16 is attached to the shaft 14, and the other end to the restraining projection 15. Fig. 3 shows a case in which the coil spring 16 is in a neutral state, wherein the rotating shaft 5, the shaft 14, and the restraining projection 15 extend parallel to each other and are arranged on a line.

In the above-described vibration-generating device 10, when the motor 2 reciprocates in the clockwise and counterclockwise directions in Fig. 3, an impact occurs every time the rotational direction is changed from A to B, or from B to A, and the housing 1 vibrates due to the impact. In addition, damping motion which occurs when the motor 2 is stopped after being rotated in one direction also generates vibration of the housing 1.

Although a DC motor may be used as the motor 2, when a stepping motor is used for causing the reciprocating motion of the rotating shaft, the rotational speed can be easily controlled merely by changing the frequency (driving pulses). Accordingly, the vibration frequency can be changed, and the housing can be vibrated in various manners. In addition, since the stepping motor starts/stops with a quick response time, sharply modulated vibration can be obtained.

In the above-described vibration-generating device 10, a two-phase stepping motor, for example, may be used as the motor 2. In a stepping motor of this type, two phases are excited at the same time, and an assembly of N and S magnetized rotor magnets is fixed to a rotating shaft which is retained in a rotatable manner, and a stator coil assembly is disposed at the periphery of the rotor magnet assembly. By using such a two-phase motor, a large driving torque can be obtained compared to when a single-phase motor is used.

As shown in Fig. 16, the vibration-generating device 10 includes a control unit 11, and the control unit 11 is connected to the motor 2 via a motor driver 2a. The control unit 11 controls driving pulses applied to the motor 2, and. the amplitude and frequency of vibration are changed in accordance with the driving pulses.

When an operating unit 150 is connected to the control unit 11, the vibration-generating device 10 can be used as an electronic apparatus 200. However, the electronic apparatus 200 does not always have to include the operating unit 150. The control unit 11 may also be connected to a display such as a liquid crystal panel, an output device for outputting sound, etc. An operating signal is transmitted from the operating unit 150 to the control unit 11 so as to drive the motor 2 of the vibration-generating device 10, and the housing 1 is thereby vibrated. The electronic apparatus 200 may be, for example, a mobile phone, a PHS, a pager, a PDA, a notebook personal computer, a mouse, a keyboard, play equipment, etc.

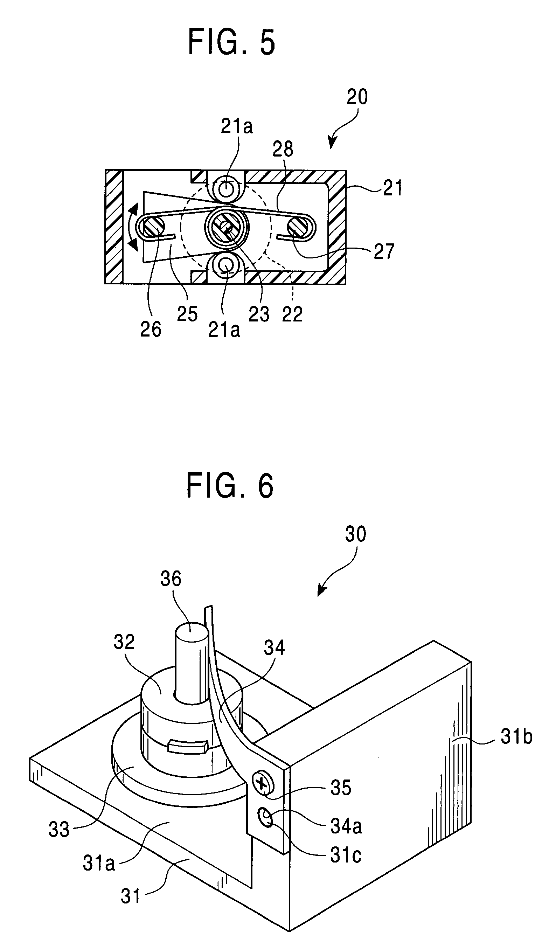

Fig. 4 is a side view of a vibration-generating device according to a second embodiment of the present invention, and Fig. 5 is a sectional view of Fig. 4 cut along line V-V.

A vibration-generating device 20 is a device similar to the above-described vibration-generating device 10 whose. size is reduced. A housing 21 is fixed to a motor 22 with screws 21a and 21a at the side at which a rotating shaft 23 is provided . The housing 21 has a shape such that the housing 21 surrounds the rotating shaft 23, and the top and parts of the side surfaces of the housing 21 are open. In addition, a converting unit similar to that used in the vibration-generating device 10 is provided. More specifically, a weight 24, an arm 25, and a shaft 26 are integrally formed, and the weight 24 and the arm 25 are fixed to the rotating shaft 23. In addition, a restraining projecting 27 is formed on the housing 21. A coil spring 28 is wound around the rotating shaft 23, and one end thereof is attached to the shaft 26 and the other end to the restraining projecting 27.

Similarly to the vibration-generating device 10, also in the vibration-generating device 20, when the rotating shaft 23 of the motor 22 reciprocates in the direction shown by the double-ended arrow in Fig. 5, the housing 21 vibrates due to the impact which occurs every time the rotational direction is reversed or due to vibration generated by the damping motion.

Fig. 6 is a perspective view showing a vibration-generating device according to a third embodiment of the present invention. In a vibration-generating device 30 shown in Fig. 6, a motor 32 and a metal leaf spring 34 (elastic member) are attached to a housing 31.

The motor 32 is fixed on the top surface 31a of the housing 31 with a rubber buffer 33 therebetween. In addition, the leaf spring 34 is fixed on a side surface of a retaining plate 31b which extends vertically from the top surface 31a of the housing 31. The retaining plate 31b has a positioning projection 31c and a fixing hole, and the leaf spring 34 has a positioning hole 34a and a screw hole. A screw 35 is inserted into the screw hole and the fixing hole while the positioning hole 34a and the positioning projection 31c are engaged with each other, so that the leaf spring 34 is fixed to the housing 31.

In the vibration-generating device 30, the rotating shaft 36 is continuously pushed by the leaf spring 34. Similarly to the above-described cases, when the motor 32 is driven such that the rotating shaft 36 reciprocates, the housing 31 vibrates due to the impact which occurs every time the rotational direction of the rotating shaft 36 is reversed or due to the damping vibration. In addition, in the vibration-generating device 30 shown in Fig. 6, the housing 31 can also be vibrated by rotating the rotating shaft 36 stepwise in one direction and transmitting the vibration of the rotating shaft 36 to the housing 31 via the leaf spring 34.

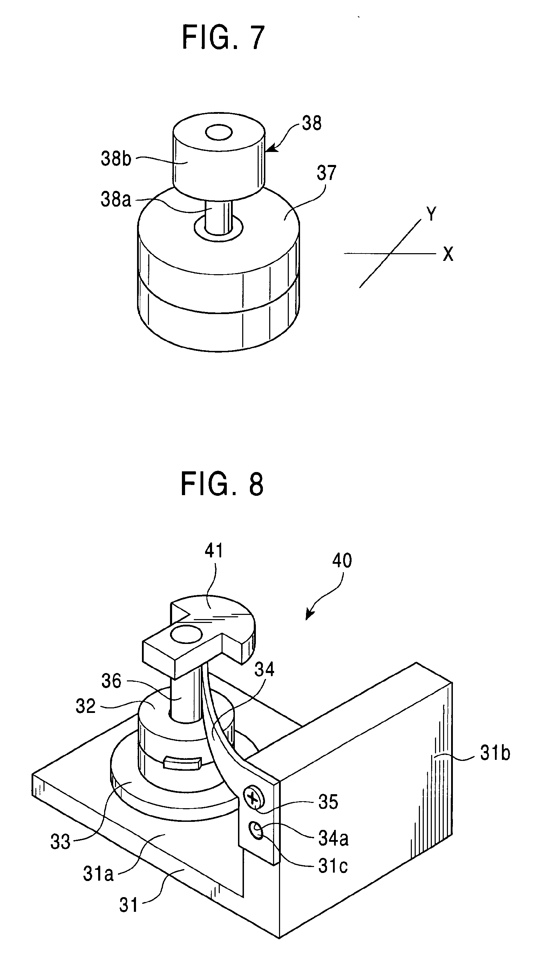

Fig. 7 shows a modification of the motor 32 contained in the vibration-generating device 30 shown in Fig. 6. With reference to Fig. 7, a motor 37 includes a shaft 38a and a rotating shaft 38 constructed of a contact portion 38b which is attached to the shaft 38a at the end thereof. The shaft 38a has a circular shape in cross-section along an X-Y plane, and the contact portion 38b has an elliptical shape in cross-section along the X-Y plane. The weight distribution of the contact portion 38b is uneven around the rotational center. In this case, the leaf spring 34 continuously pushes the contact portion 38b of the rotating shaft 38. In this motor 37, the contact portion 38b may be formed integrally with the shaft 38a, and the contact portion 38b having the elliptical shape may be formed only at a region at which the leaf spring 34 comes into contact with the contact portion 38b. When this motor 37 is installed in the vibration-generating device, a larger vibration is transmitted to the housing 31 from the leaf spring 34 compared to when the contact portion 38b has a circular shape.

Fig. 8 is a perspective view of a vibration-generating device 40, which is a modification of the vibration-generating device 30 shown in Fig. 6. The vibration-generating device 40 is constructed similarly to the vibration-generating device 30. Therefore, components having the same construction as those of the vibration-generating device 30 are denoted by the same reference numerals, and explanations thereof are omitted.

The vibration-generating device 40 is constructed by attaching a weight 41 to the rotating shaft 36 of the motor 32 contained in the vibration-generating device 30. In this case, larger vibration is generated compared to the above-described vibration-generating device 30 when the motor 32 is driven in a similar manner. In the vibration-generating device 40, when the rotating shaft 36 and the weight 41 reciprocate, vibration is generated at the rotating shaft 36 and is transmitted to the housing 31 via the leaf spring 34, so that vibration of the housing 31 is generated. Accordingly, the leaf spring 34 serves to transmit the generated vibration to the housing 31, so that the entire body of the vibration-generating device 40 vibrates.

Also in the vibration-generating device 40 shown in Fig. 8, the rotating shaft 36 pushed by the leaf spring 34 may be formed in an elliptical shape in cross-section similarly to the one shown in Fig. 7.

The vibration-generating device according to the present invention is not limited to the above-described embodiments, and various modifications are possible. For example, in the vibration-generating device 40 shown in Fig. 8, the weight 41 may be pushed by the leaf spring 34 fixed to the housing. In addition, in the vibration-generating devices 30 and 40 shown in Figs. 6 and 8, respectively, the leaf spring 34 and the weight 41 may be omitted and the housing 31 may be vibrated merely by driving the motor alone. Also in this case, the motor 37 shown in Fig.. 7 may be used.

In the above-described vibration-generating device 40, a larger impact occurs when the stepping motor 32 is driven, and larger vibration is accordingly generated due to the impact. Therefore, the vibration of the housing 31 generated when the impact or the vibration is transmitted from the rotating shaft 36 to the housing 31 via the leaf spring 34 has a larger amplitude compared to the vibration generated by the vibration generated by the generating device 10.

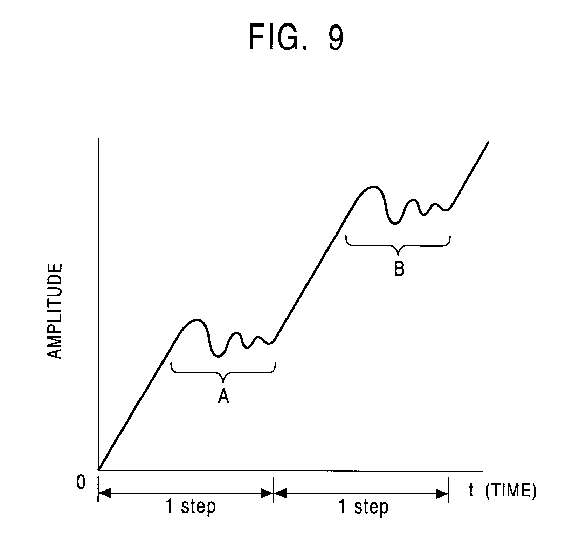

Fig. 9 shows a waveform obtained by driving the vibration-generating device 30 or 40. Since the vibration-generating devices 30 and 40 use a stepping motor, a single-step operation is performed every time a single pulse is input. As shown in Fig. 9, when a small time interval is provided after each step, damping vibration occurs after each step, as shown in areas denoted by A and B. This damping vibration is utilized for vibrating the housing 31. In addition, when the rotational angle corresponding to a single step or the rotational speed is increased, an impact large enough to vibrate the housing can be obtained by driving the stepping motor. In addition, continuous vibration of the housing 31 may also be generated by continuously rotating the rotating shaft 36 of the stepping motor 32.

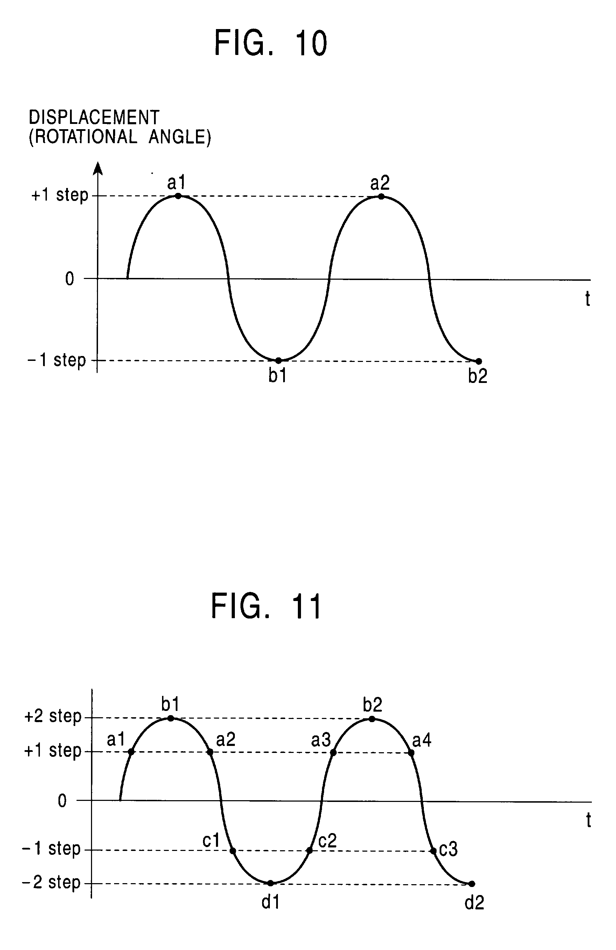

Next, a control method used in the vibration-generating device according to the present invention will be described below with reference to Figs. 10 to 15.

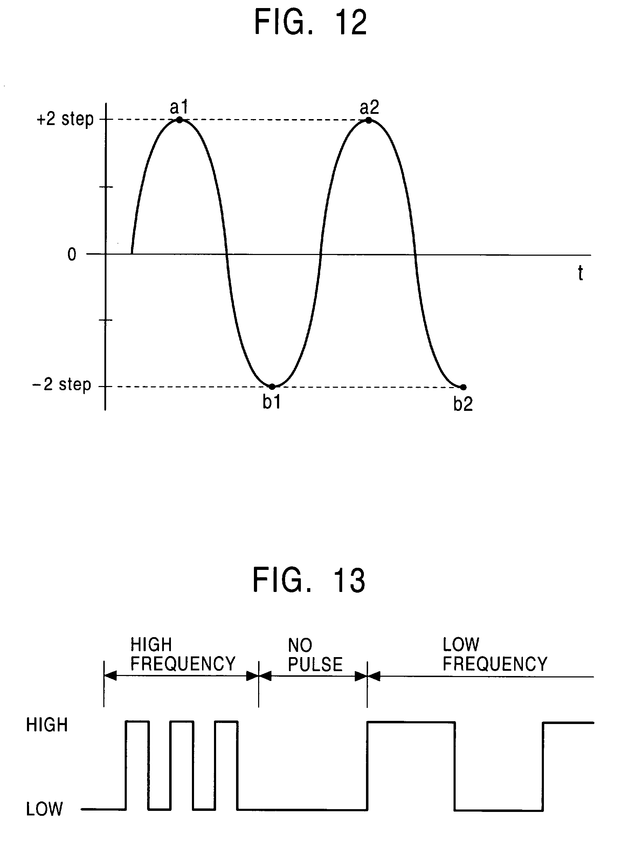

The waveform shown in Fig. 10 is used as a reference for waveforms shown in Figs. 11 and 12. In the figures, the horizontal axis shows time t and the vertical axis shows the rotational angle of the rotating shaft.

When a single pulse is input to the motor, the weight moves (rotates). from its neutral position O to point al. Accordingly, the coil spring 16 or 28 (or the leaf spring 34) is deformed due to the movement of the weight.. Then,. if the excitation direction is reversed at this time, an impact force generated due to the reversal is applied to the coil spring 16 or 28 (or to the leaf spring 34). Then, the weight moves to point b1 due to the elastic restoring force of the coil spring 16 or 28 (or to the leaf spring 34) and the excitation in the opposite direction. By reciprocating the weight in this manner, the impact force generated by the reversal at each step can be converted into vibration of the housing by the coil spring 16 or 28 (or the leaf spring 34).

In the above-described vibration-generating device, when the excitation direction is reversed at points a1, b1, a2, b2, ..., an impact occurs and damping vibration is generated due to the impact. The generated vibration is transmitted to the housing via the spring, and the housing intermittently vibrates at a period proportional to the period of the reciprocating motion of the rotating shaft.

In addition, Fig. 11 shows the waveform obtained when the rotating shaft is reciprocated by the stepping motor such that it is rotated in one direction for two steps and then in the opposite direction for two steps by reversing the excitation direction. A single step means that the stepping motor is rotated by a predetermined rotational angle by applying a single pulse.

With reference to Fig. 11, the rotating shaft rotates from its neutral position O to point a1 at a first step, and further rotates to point b1 at the next step. Then, the excitation direction is reversed and the rotating shaft successively rotates to points a2, c1, and d1. In this manner, the rotating shaft reciprocates.

When the stepping motor is driven in this manner, the rotational speed of the rotating shaft changes suddenly at each of points a1, a2, c1, and c2, so that an impact occurs and damping vibration is generated due to the impact at each of the above points. In addition, the rotating shaft starts to return to its neutral position by the force applied by the spring at points b1, d1, b2, and d2, so that a large impact occurs and large damping vibration is generated due to the impact. Accordingly, intermittent vibration is continuously generated.

Fig. 12 shows the waveform obtained in a case in which the rotating shaft rotates by an angle corresponding to two steps by a single pulse. The rotating shaft is first moved to point a1, and the excitation is canceled so that it returns to the neutral position O by the elastic restoring force of the spring. Then, the rotating shaft rotates in the opposite direction by an angle corresponding to two steps by a single pulse. Accordingly, the rotating shaft is reciprocated.

In Fig. 12, the amplitude of the reciprocating rotation of the rotating shaft is double that shown in Fig. 10. Accordingly, a large restoring force is applied to the rotating shaft from the spring at points a1, b1, ... Accordingly, a large impact occurs and large damping motion is generated due to the impact at points a1, b1, ..., so that a large vibration is transmitted to the housing via the spring and the housing vibrates at a large amplitude.

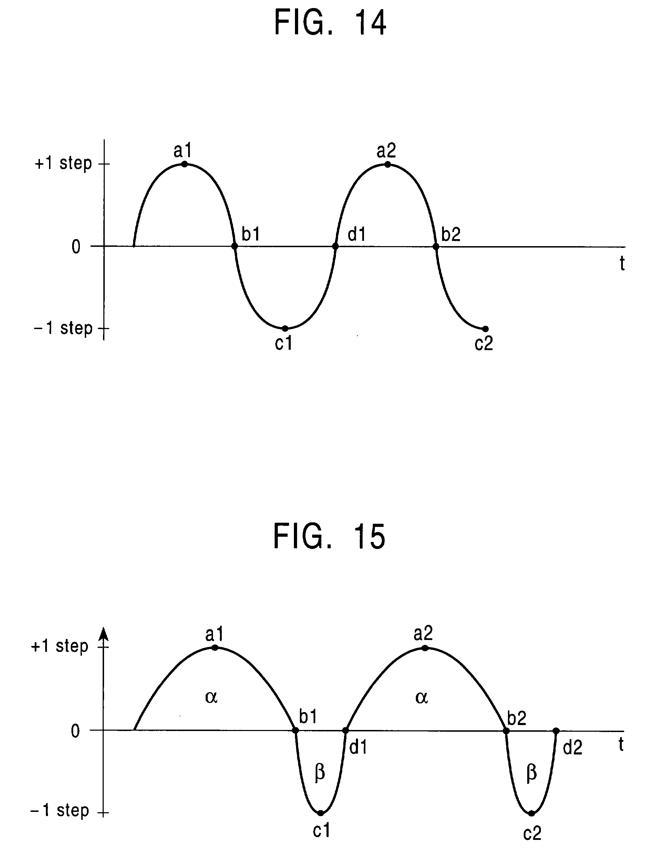

Fig. 13 shows a waveform used in a case. in which a period where no pulse is applied is provided when the frequency applied to the motor is changed from a high frequency to a low frequency. When the period where no pulse is applied is provided, a user strongly feels that the kind of vibration is changed. A slight change in vibration can be recognized especially when the low-frequency period and the high-frequency period are short. As a result, sharply modulated vibration can be obtained. In addition, when the excitation is also performed at points b1, d1, b2, ..., which indicate the neutral position, in Fig. 14, sharply modulated vibration can be obtained and the change in vibration can be easily recognized.

Fig. 15 shows the waveform used in a control method for causing further variations in vibration. In this case, the rotational speed is changed at each step by changing the frequency. By changing the rotational speed at each step, the degree of impact can be changed and various vibrations can be obtained.

In addition, it is possible to emit a sound based on the vibration generated by reciprocating the motor, and a desired melody can be played by changing the vibration frequency and making musical scales with the vibrating sound. Furthermore, by using the waveform shown in Fig. 15 in addition to the waveform shown in Fig. 10, the tempo of the sound obtained by vibration can be changed.

## Claims

1. A vibration-generating device comprising:
a rotary motor retained inside a housing; and
a control unit which drives the motor,
wherein the control unit reciprocally rotates a rotating shaft of the motor, thereby causing the housing to vibrate.

2. A vibration-generating device according to Claim 1, further comprising an elastic member which connects the rotating shaft and the housing,
wherein, when the rotational direction of the rotating shaft is reversed after the rotating shaft is rotated in one direction, a restoring force of the elastic member is applied to the rotating shaft, thereby causing the housing to vibrate.

3. A vibration-generating device according to Claim 1 or 2, wherein the motor is a stepping motor.

4. A vibration-generating device comprising:
a rotary stepping motor retained inside a housing; and
a control unit which drives the stepping motor,
wherein the control unit rotates a rotating shaft of the stepping motor by driving the stepping motor, thereby causing the housing to vibrate.

5. A vibration-generating device according to Claim 4, further comprising an elastic member which connects the rotating shaft and the housing,
wherein vibration of the rotating shaft is transmitted to the housing via the elastic member.

6. A vibration-generating device according to any of Claims 1 to 5, wherein a weight whose weight distribution is uneven around the rotational center of the rotating shaft is attached to the rotating shaft.

7. A vibration-generating device according to any of Claims 1 to 6, wherein at least a part of the rotating shaft has a shape such that the weight distribution thereof is uneven around the rotational center.

8. A vibration-generating device according to any of Claims 3 to 7, wherein the frequency of the vibration of the housing is varied by controlling driving pulses applied to the stepping motor by the control unit.

9. A vibration-generating device according to any of Claims 3 to 8, wherein the amplitude of the vibration of the housing is varied by controlling driving pulses applied to the stepping motor by the control unit.

10. An electronic apparatus comprising a vibration-generating device including a rotary motor retained inside a housing and a control unit which drives the motor, wherein the control unit reciprocally rotates a rotating shaft of the motor, thereby causing the housing to vibrate.

11. An electronic apparatus comprising a vibration-generating device including a rotary stepping motor retained inside a housing and a control unit which drives the stepping motor, wherein the control unit rotates a rotating shaft of the stepping motor by driving the stepping motor, thereby causing the housing to vibrate.
